# FASCICULE DE BREVET EUROPEEN

(11) **EP 4 055 259 B1**
(45) Date de publication et mention de la délivrance du brevet: **17.04.2024**
(21) Numéro de dépôt: 20842006.7
(22) Date de dépôt: 08.12.2020
(51) Int. Cl.: F02C 7/14, F02K 3/06, F28F 13/12, F02C 7/18, F28D 21/00

(54) **ECHANGEUR DE CHALEUR COMPORTANT UNE PAROI PERTURBATRICE À GÉNÉRATEURS DE TURBULENCE CREUX**
WÄRMETAUSCHER MIT EINER PRALLWAND MIT HOHLEN TURBULENZERZEUGERN
HEAT EXCHANGER COMPRISING A BAFFLE WALL WITH HOLLOW TURBULENCE GENERATORS

(30) Priorité: 12.12.2019 FR 1914285
(43) Date de publication de la demande: 14.09.2022
(73) Titulaire: SAFRAN AIRCRAFT ENGINES, 75015 Paris (FR)
(72) Inventeur: CHASSAGNE, Amélie Argie Antoinette, 77550 MOISSY-CRAMAYEL (FR); BRUNET, Antoine Robert Alain, 77550 MOISSY-CRAMAYEL (FR); ZACCARDI, Cédric, 77550 MOISSY-CRAMAYEL (FR)
(74) Mandataire: Brevalex
(86) Numéro de dépôt international: PCT/FR2020/052335
(87) Numéro de publication internationale: WO 2021/116591

(56) Documents cités:
- EP-A1- 3 290 846
- US-A1- 2012 114 468
- US-A1- 2019 360 398

## Description

### DOMAINE TECHNIQUE

L'invention concerne une turbomachine telle qu'un turboréacteur, traversé par au moins une veine de flux gazeux, cette veine étant délimitée par une paroi interne de ce moteur.

### ÉTAT DE LA TECHNIQUE ANTÉRIEURE

Dans un tel moteur, l'air est admis dans une manche d'entrée pour traverser une soufflante comportant une série de pales rotatives avant de se scinder en un flux primaire central et un flux secondaire entourant le flux primaire.

Le flux primaire est compressé par des compresseurs avant d'atteindre une chambre de combustion, après quoi il se détend en traversant des turbines, avant d'être évacué en générant une poussée. Le flux secondaire est quant à lui propulsé directement par la soufflante pour générer une poussée complémentaire.

Le flux primaire et le flux secondaire circulent respectivement dans une veine primaire et une veine secondaires séparées l'une de l'autre par un espace dit inter-veines.

La veine primaire est délimitée extérieurement par une paroi interne de l'espace inter-veines, la veine secondaire est délimitée intérieurement par une paroi externe de l'espace inter-veines et elle est délimitée extérieurement par une paroi interne d'une nacelle entourant le turboréacteur.

Dans un tel moteur, différents composants, de type paliers, roulements et autres, sont lubrifiés par de l'huile qui circule dans un circuit hydraulique intégrant un échangeur thermique, sous forme d'un radiateur de refroidissement, assurant que cette huile reste à une température adaptée en toutes circonstances. Un tel échangeur est usuellement désigné par l'acronyme ACOC signifiant "Air Cooled Oil Cooler", c'est-à-dire refroidi par air et refroidissant l'huile.

Cet échangeur est fixé à une paroi du réacteur, et il dépasse de cette paroi pour être traversé par une portion du flux qui longe cette paroi en circulant dans le réacteur, de manière à refroidir l'huile du circuit hydraulique.

Le document EP 3 290 846 A1 divulgue un échangeur de chaleur selon le préambule de la revendication 1. Un tel échangeur constitue ainsi une forme en relief qui constitue de fait un obstacle introduisant des pertes de charge dans l'écoulement du flux dans le moteur.

Le but de l'invention est de proposer un agencement d'intégration d'un tel échangeur qui limite les pertes de charges qu'il introduit dans l'écoulement du flux traversant ce réacteur.

### EXPOSÉ DE L'INVENTION

A cet effet, l'invention a pour objet un échangeur de chaleur entre un fluide et un flux d'air selon la revendication1.

L'invention permet ainsi de se dispenser des ailettes habituellement prévues dans un tel échangeur de chaleur, pour obtenir une efficacité d'échange thermique optimale tout en réduisant la perte de charge introduite dans le flux secondaire par la présence de l'échangeur.

A cet effet, l'invention a également pour objet un échangeur ainsi défini, comportant au moins un générateur de turbulences disposé à une extrémité amont de la paroi perturbatrice.

A cet effet, l'invention a également pour objet un échangeur ainsi défini, dans lequel la paroi perturbatrice comporte plusieurs générateurs de turbulences répartis selon au moins une direction perpendiculaire à la direction longitudinale.

A cet effet, l'invention a également pour objet un échangeur ainsi défini, comportant au moins deux générateurs de turbulences contigus ayant des formes et/ou des dimensions différentes.

A cet effet, l'invention a également pour objet un échangeur ainsi défini, dans lequel au moins un générateur de turbulences présente une géométrie variable par rapport à la face externe, entre un état désactivé dans lequel il affleure avec la face externe pour ne pas générer de turbulences, et un état activé dans lequel il forme un creux par rapport à la face externe pour générer des turbulences.

A cet effet, l'invention a également pour objet un échangeur ainsi défini, dans lequel la paroi d'échange thermique comporte des cavités internes s'ouvrant vers la face externe et correspondant chacune à un générateur de turbulences, la face externe comportant une membrane souple étanche, l'activation d'un générateur de turbulences étant obtenue par dépressurisation de la cavité interne correspondante.

A cet effet, l'invention a également pour objet un échangeur ainsi défini, intégrant un système de pilotage de l'état activé ou désactivé des générateurs de turbulences par rapport à la face externe.

A cet effet, l'invention a également pour objet un échangeur ainsi défini, dans lequel le système de pilotage est de type pneumatique.

A cet effet, l'invention a également pour objet une turbomachine traversée par un flux d'air, un étage de redresseur comportant des aubes directrices, avec un échangeur ainsi défini, cet échangeur comportant une paroi d'échange intégrée à un carter de la turbomachine délimitant une veine d'écoulement du flux d'air, cet échangeur de chaleur étant situé en aval du redresseur.

### BRÈVE DESCRIPTION DES DESSINS

La Figure 1 est une vue en coupe longitudinale d'un turboréacteur selon l'invention ;
la Figure 2 est une vue en coupe longitudinale locale du turboréacteur selon l'invention au niveau d'un échangeur de chaleur ;
la Figure 3 est une vue radiale à plat locale du turboréacteur selon l'invention montrant deux échangeurs thermiques montés en aval du redresseur de fan ;
la Figure 4 est une vue en coupe longitudinale d'une forme de générateur de turbulences creux ;
la Figure 5 est une vue schématique en coupe d'un profil montrant plusieurs exemples de formes de générateurs de turbulences ;
la Figure 6 est une vue en perspective montrant un redresseur avec son échangeur thermique ;
la Figure 7 est une vue en perspective montrant localement un échangeur selon l'invention monté en aval d'aubes directrices ;
la Figure 8 est une vue schématique en coupe d'un générateur de turbulences à géométrie variable à l'état désactivé ;
la Figure 9 est une vue schématique en coupe d'un générateur de turbulences à géométrie variable à l'état actif.

### EXPOSÉ DÉTAILLÉE DE L'INVENTION

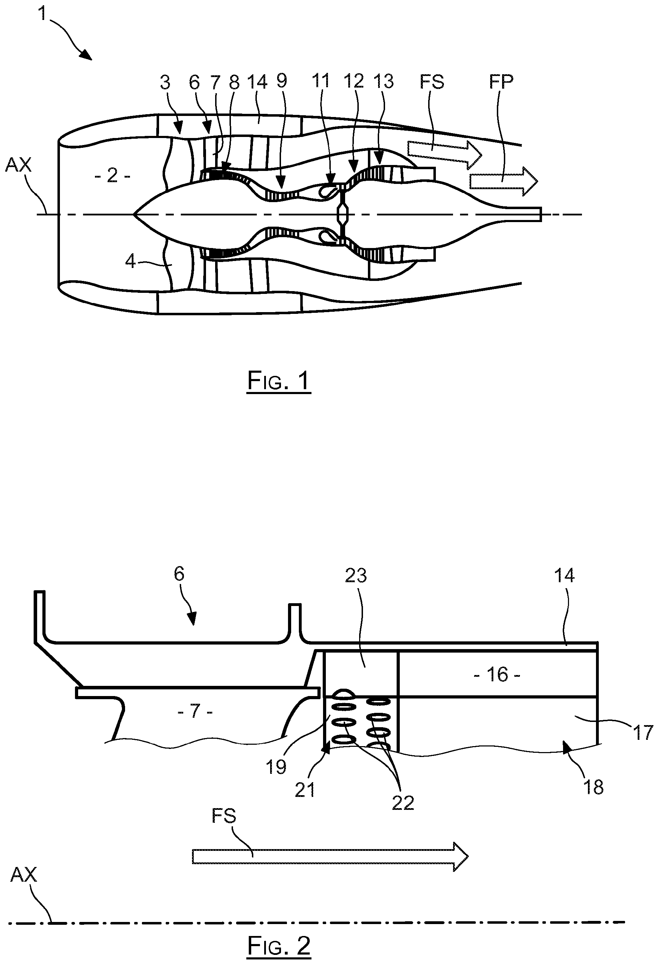

Sur la figure 1, un moteur 1 comporte une manche d'entrée 2 par laquelle l'air est admis pour traverser une soufflante 3 comportant une série de pales rotatives 4 suivie d'un redresseur 6 formé d'aubes directrices 7 avant de se scinder en un flux primaire central FP et un flux d'air secondaire FS entourant le flux primaire.

Le flux primaire FP est comprimé par des compresseurs basse pression 8 et haute pression 9 avant d'atteindre une chambre de combustion 11, après quoi il se détend en traversant une turbine haute pression 12 et une turbine basse pression 13, avant d'être évacué en générant une poussée auxiliaire. Le flux secondaire FS est quant à lui propulsé directement par la soufflante pour générer une poussée principale.

Chaque turbine 12, 13 comporte des séries d'aubes orientées radialement et régulièrement espacées autour d'un axe principal AX, un carter externe 14 entourant l'ensemble du moteur.

Le moteur 1 intègre un circuit de circulation de l'huile de lubrification et/ou le refroidissement de ses composants, tels que les paliers portant ses éléments rotatifs ou des organes de transmission que ce moteur intègre. Le refroidissement de cette huile est assuré par le flux secondaire qui est frais, au moyen d'un échangeur thermique.

Cet échangeur, repéré par 16 sur la figure 2, est porté par une virole interne du carter externe 14 sensiblement en aval des aubes directrices 7, et il comporte une paroi d'échange thermique 17 ayant une face d'échange thermique 18, radialement interne, qui est baignée par le flux secondaire FS pour être refroidie par celui-ci. Cette face d'échange 18 est dépourvue de tout relief pour ne pas perturber l'écoulement de flux secondaire.

Cet échangeur 16 comporte des canalisations internes non représentées dans lesquelles circule l'huile à refroidir, et qui sont thermiquement liées à la paroi 17 pour refroidir l'huile circulant dans ces canalisations.

Selon l'invention, on prévoit une paroi perturbatrice 19 située dans le prolongement de la face d'échange thermique 18 de l'échangeur, en amont de celle-ci par rapport au sens de circulation du flux secondaire FS. Cette paroi perturbatrice 19 introduit localement des turbulences dans l'écoulement du flux secondaire FS qui la longe, pour accroître l'efficacité de l'échange thermique entre ce flux primaire et la paroi 17.

A cet effet, la paroi perturbatrice 19 comporte une face externe 21, qui est pourvue de générateurs de turbulences 22, de formes creuses, permettant de dévier localement le flux secondaire pour y introduire des turbulences. Le flux longeant alors la face d'échange 18 est de fait turbulent, ce qui augmente significativement ses échanges thermiques avec la face 18, pour refroidir l'huile de l'échangeur 16 plus efficacement et sans perturber notablement l'écoulement global du flux secondaire FS.

Dans l'exemple des figures, la paroi perturbatrice 19 et sa face 21, radialement interne, correspondent à la paroi et à la face radialement interne d'un élément annulaire 23 intégré au carter 14. Cet élément annulaire 23 est interposé longitudinalement entre les aubes directrices 7 du redresseur 6 et l'échangeur 16, sa face 21 étant située radialement au même niveau que la face d'échange 18.

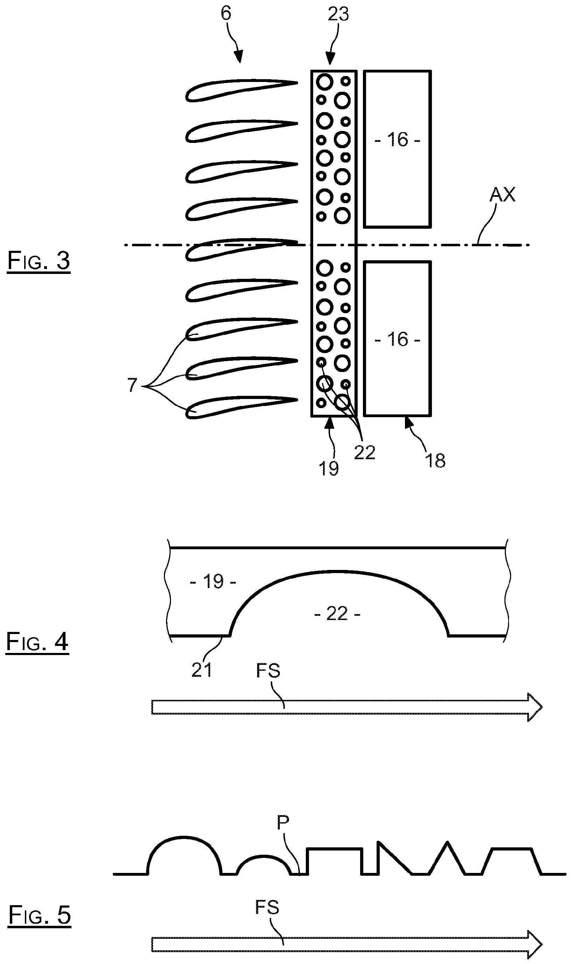

Comme visible sur la figure 3, le moteur 1 peut comporter plusieurs échangeurs 16 montés à la circonférence interne du carter 14, en étant circonférentiellement espacés les uns des autres et situés longitudinalement immédiatement en aval de l'élément annulaire 23.

Les générateurs de turbulence 22 peuvent se présenter sous forme de cavités sensiblement hémisphériques, comme représenté schématiquement sur la figure 4, s'ouvrant dans la face externe 21 en ayant avantageusement des dimensions différentes pour maximiser les turbulences qu'ils introduisent. Avantageusement plusieurs générateurs de turbulences 22 sont agencés les uns derrière les autres selon la direction longitudinale.

Les générateurs de turbulence 22 peuvent également avoir des formes creuses autres que la forme hémisphérique, comme illustré schématiquement sur la figure 5, où plusieurs formes ont été représentées au sein d'un même profil P. Il peut par exemple s'agir d'une forme pyramidale, une forme présentant en section dans un plan passant par l'axe AX un contour de type triangulaire, rectangulaire, carré ou encore trapézoïdal.

D'une manière générale, les générateurs de turbulences 22 ont radialement une hauteur significativement inférieure à la hauteur de veine selon la direction radiale. Cette hauteur est la différence de rayon entre la face interne du carter 14, qui délimite extérieurement le flux secondaire, et la face externe d'un carter délimitant intérieurement le flux secondaire. La longueur de ces générateurs de turbulences est quant à elle comprise entre un dixième et dix fois cette hauteur.

Avantageusement, les différents générateurs de turbulences 22 ont des formes différentes et des dimensions différentes, de façon à accroître la turbulence qu'ils génèrent.

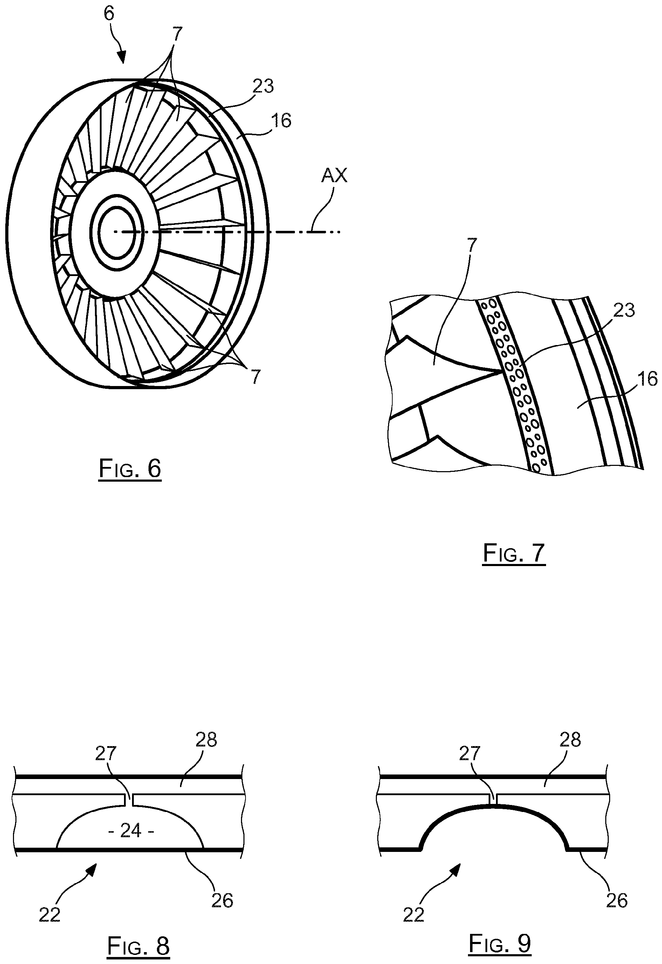

Comme visible sur les figures 6 et 7, la paroi perturbatrice 19 a une forme générale de couronne cylindrique intégrée à la face interne du carter 14, en étant située longitudinalement entre les aubes directrices 7 et le ou les échangeurs de chaleur 16.

Avantageusement, les générateurs de turbulences 22 sont du type à géométrie variable pour pouvoir être activés et désactivés au besoin, ce qui permet alors de sensiblement annuler la perte de charge lorsque le refroidissement requis est faible voire nul, par exemple par temps froid.

Comme illustré sur la figure 8, le générateur de turbulences 22 peut alors être formé à partir d'une paroi perturbatrice 19 comportant des cavités hémisphériques internes 24 s'ouvrant dans la face externe 21, avec une face externe 21 sous forme d'une membrane souple et étanche 26.

L'enceinte délimitée par la cavité 24 couverte par la membrane 26 est sensiblement étanche à l'air, et la cavité 24 comporte au niveau de son fond un trou 27 traversant la paroi 19 en étant mis en communication avec un canal 28 de pressurisation/dépressurisation longeant la face arrière de la paroi 19.

Ainsi, le générateur de turbulences 22 est à l'état inactif lorsque sa cavité 24 est à pression ambiante, sa membrane 26 ayant alors une forme localement sensiblement plane : elle ne définit pas de forme creuse pour ne pas générer de turbulences.

L'activation du générateur de turbulences 22 consiste alors à dépressuriser sa cavité 24 en dépressurisant le canal 28, de sorte que la membrane 26 vient alors épouser la forme de cette cavité pour constituer une portion creuse générant des turbulences au niveau du flux secondaire FS qui la longe.

La dépressurisation peut être générée en reliant le canal 28 à une rétion située en amont de la soufflante, où la pression est plus faible qu'en aval des aubes directrices. Un système de commande, de type à contrôle actif ou passif peut alors être prévu pour activer ou désactiver les générateurs de turbulences 22 selon que le besoin en refroidissement est important ou faible.

Alternativement, à l'activation et la désactivation des générateurs de turbulences 22 par dépressurisation et pressurisation de la cavité 24, on peut prévoir une tige traversant le trou 27 pour avoir son extrémité solidarisée à la membrane 26. Cette tige peut alors être pilotée électromagnétiquement pour être soit poussée afin d'aligner la membrane 26 avec la face interne afin de désactiver le générateur 22, ou bien pour être tirée afin de plaquer cette membrane contre le fond de la cavité 24 afin de générer des turbulences.

## Revendications

1. Echangeur de chaleur (16) entre un fluide et un flux d'air (FS), comprenant une paroi d'échange thermique (17) séparant le fluide et le flux d'air (FS), la paroi d'échange thermique (17) comportant une face d'échange thermique (18) qui s'étend parallèlement à une direction longitudinale (AX) d'écoulement du flux d'air (FS) et avec laquelle le flux d'air (FS) est en contact, cet échangeur comportant une paroi perturbatrice (19) s'étendant dans le prolongement de la paroi d'échange thermique (17) et en amont de celle-ci par rapport à la direction de circulation du flux d'air (FS), la paroi perturbatrice (19) comportant au moins un générateur de turbulences (22) de forme creuse par rapport à la face externe (21),
l'échangeur de chaleur (16) étant **caractérisé en ce que** la face d'échange thermique (18) est dépourvue de relief.

2. Echangeur (16) selon la revendication précédente, comportant au moins un générateur de turbulences (22) disposé à une extrémité amont de la paroi perturbatrice (19).

3. Echangeur (16) selon la revendication 1 ou 2, dans lequel la paroi perturbatrice (19) comporte plusieurs générateurs de turbulences (22) répartis selon au moins une direction perpendiculaire à la direction longitudinale (AX).

4. Echangeur (16) selon la revendication précédente, comportant au moins deux générateurs de turbulences (22) contigus ayant des formes et/ou des dimensions différentes.

5. Echangeur (16) selon l'une des revendications précédentes, dans lequel au moins un générateur de turbulences (22) présente une géométrie variable par rapport à la face externe (21), entre un état désactivé dans lequel il affleure avec la face externe (21) pour ne pas générer de turbulences, et un état activé dans lequel il forme un creux par rapport à la face externe (21) pour générer des turbulences.

6. Echangeur (16) selon la revendication précédente, dans lequel la paroi perturbatrice (19) comporte des cavités internes (24) s'ouvrant vers la face externe (21) et correspondant chacune à un générateur de turbulences (22), la face externe (21) comportant une membrane souple étanche (26), l'activation d'un générateur de turbulences (22) étant obtenue par dépressurisation de la cavité interne (24) correspondante.

7. Echangeur (16) selon la revendication précédente, intégrant un système de pilotage de l'état activé ou désactivé des générateurs de turbulences (22) par rapport à la face externe (21).

8. Echangeur (16) selon l'une des revendications 5 à 7, dans lequel le système de pilotage est de type pneumatique.

9. Turbomachine (1) traversée par un flux d'air (FS), un étage de redresseur (6) comportant des aubes directrices (7), avec un échangeur (16) selon l'une des revendications précédentes, cet échangeur (16) comportant une paroi d'échange (17) intégrée à un carter (14) de la turbomachine (1) délimitant une veine d'écoulement du flux d'air (FS), cet échangeur de chaleur (16) étant situé en aval du redresseur (6).

## Patentansprüche

1. Wärmetauscher (16) zwischen einem Fluid und einem Luftstrom (FS), der eine Wärmeaustauschwand (17) umfasst, die das Fluid und den Luftstrom (FS) trennt, wobei die Wärmeaustauschwand (17) eine Wärmeaustauschfläche (18) umfasst, die sich parallel zu einer Längsrichtung (AX) der Strömung des Luftstroms (FS) erstreckt und mit der sich der Luftstrom (FS) in Kontakt befindet, wobei dieser Tauscher eine Prallwand (19) umfasst, die sich in Bezug auf die Zirkulationsrichtung des Luftstroms (FS) in der Verlängerung der Wärmeaustauschwand (17) und stromaufwärts derselben erstreckt, wobei die Prallwand (19) mindestens einen Turbulenzgenerator (22) von in Bezug auf die Außenfläche (21) hohler Form umfasst,
wobei der Wärmetauscher (16) **dadurch gekennzeichnet ist, dass** die Wärmeaustauschfläche (18) kein Relief aufweist.

2. Tauscher (16) nach dem vorstehenden Anspruch, der mindestens einen Turbulenzgenerator (22) umfasst, der an einem stromaufwärtigen Ende der Prallwand (19) angeordnet ist.

3. Tauscher (16) nach Anspruch 1 oder 2, wobei die Prallwand (19) mehrere Turbulenzgeneratoren (22) umfasst, die in mindestens einer Richtung senkrecht zur Längsrichtung (AX) verteilt sind.

4. Tauscher (16) nach dem vorstehenden Anspruch, der mindestens zwei aneinandergrenzende Turbulenzgeneratoren (22) umfasst, die unterschiedliche Formen und/oder Abmessungen aufweisen.

5. Tauscher (16) nach einem der vorstehenden Ansprüche, wobei mindestens ein Turbulenzgenerator (22) eine Geometrie aufweist, die in Bezug auf die Außenfläche (21) zwischen einem deaktivierten Zustand, in dem er mit der Außenfläche (21) bündig ist, um keine Turbulenzen zu erzeugen, und einem aktivierten Zustand variabel ist, in dem er in Bezug auf die Außenfläche (21) eine Höhlung bildet, um Turbulenzen zu erzeugen.

6. Tauscher (16) nach dem vorstehenden Anspruch, wobei die Prallwand (19) innere Hohlräume (24) umfasst, die sich zur Außenfläche (21) hin öffnen und jeweils einem Turbulenzgenerator (22) entsprechen, wobei die Außenfläche (21) eine dichte flexible Membran (26) umfasst, wobei die Aktivierung eines Turbulenzgenerators (22) durch Druckentlastung des entsprechenden inneren Hohlraums (24) erreicht wird.

7. Tauscher (16) nach dem vorstehenden Anspruch, in dem ein System zum Steuern des aktivierten oder deaktivierten Zustands der Turbulenzgeneratoren (22) in Bezug auf die Außenfläche (21) integriert ist.

8. Tauscher (16) nach einem der Ansprüche 5 bis 7, wobei das Steuersystem pneumatisch ist.

9. Turbomaschine (1), die von einem Luftstrom (FS) durchströmt wird, wobei eine Gleichrichterstufe (6) Leitschaufeln (7) umfasst, mit einem Tauscher (16) nach einem der vorstehenden Ansprüche, wobei dieser Tauscher (16) eine Austauschwand (17) umfasst, die in ein Gehäuse (14) der Turbomaschine (1) integriert ist, das einen Strömungskanal des Luftstroms (FS) begrenzt, wobei sich dieser Wärmetauscher (16) stromabwärts des Gleichrichters (6) befindet.

## Claims

1. Heat exchanger (16) between a fluid and an air flow (FS), comprising a heat exchange wall (17) separating the fluid and the air flow (FS), the heat exchange wall (17) including a heat exchange surface (18) that extends parallel to a longitudinal direction (AX) of the air flow (FS) and with which the air flow (FS) is in contact, the heat exchanger including baffle wall (19) extending in the extension of the heat exchange wall (17) and upstream of it in relation to the direction of circulation of the air flow (FS), the baffle wall (19) including at least one turbulence generator (22) of hollow shape in relation to the outer surface (21), the heat exchanger (16) being **characterized in that** the heat exchange surface is devoid of any relief.

2. Exchanger (16) according to the preceding claim, including at least one turbulence generator (22) disposed at an upstream end of the baffle wall (19).

3. Exchanger (16) according to claim 1 or 2, wherein the baffle wall (19) includes a plurality of turbulence generators (22) distributed in at least one direction perpendicular to the longitudinal direction (AX).

4. Exchanger (16) according to the preceding claim, including at least two adjacent turbulence generators (22) having different shapes and/or dimensions.

5. Exchanger (16) according to one of the preceding claims, wherein at least one turbulence generator (22) has a variable geometry in relation to the outer surface (21), between a deactivated state wherein it is flush with the outer surface (21) so as not to generate turbulences, and an activated state wherein it forms a hollow in relation to the outer surface (21) to generate turbulences.

6. Exchanger (16) according to the preceding claim, wherein the heat exchange wall (17) includes inner cavities (24) opening towards the outer surface (21) and each corresponding to a turbulence generator (22), the outer surface (21) including a sealed flexible membrane (26), the activation of a turbulence generator (22) being obtained by depressurising the corresponding inner cavity (24).

7. Exchanger (16) according to the preceding claim, integrating a system for controlling the activated or deactivated state of the turbulence generators (22) in relation to the outer surface (21).

8. Exchanger (16) according to one of claims 5 to 7, wherein the control system is of the pneumatic type.

9. Turbomachine (1) through which an air flow (FS) passes, a stator stage (6) including guide vanes (7), with an exchanger (16) according to one of the preceding claims, this exchanger (16) including an exchange wall (17) integrated into a casing (14) of the turbomachine (1) delimiting an air flow (FS) stream, this heat exchanger (16) being located downstream of the stator (6).
